# EUROPEAN PATENT SPECIFICATION

(11) **EP 2 858 430 B1**
(45) Date of publication and mention of the grant of the patent: **27.06.2018**
(21) Application number: 13360032.0
(22) Date of filing: 03.10.2013
(51) Int. Cl.: H04W 52/02

(54) **A small cell base station, communications network and communications method**
Kleinzellige Basisstation, Kommunikationsnetzwerk und Kommunikationsverfahren
Petite station de base cellulaire, réseau de communication et procédé de communications

(43) Date of publication of application: 08.04.2015
(73) Proprietor: Alcatel Lucent, 91620 Nozay (FR)
(72) Inventor: Claussen, Holger, Dublin 15 (IE); Pivit, Florian, Dublin 15 (IE)

(56) References cited:
- EP-A1- 2 355 594
- WO-A1-2010/151186
- WO-A2-2012/042375
- US-A1- 2013 148 558

## Description

### FIELD OF THE INVENTION

The present invention relates to a small cell base station for use in a communications network having a small cell gateway, a communications network comprising a small cell and a small cell gateway and a communications method.

### BACKGROUND OF THE INVENTION

Small cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, typically use the customer's broadband internet connection, for example DSL, cable or the like, as backhaul towards the macrocellular network.

Adoption small cells by wireless operators is widespread and with the increasing rate of adoption, the ability to integrate deployed small cells into the existing macrocellular network as seamlessly as possible is becoming increasingly important.

The numbers of small cells in densely populated areas can outnumber the hosting macro cells by a factor of 5 to 10 or more per macro cell sector. The installation cost and the power consumption associated with these small cells can be significant. Therefore, it is desirable to reduce the installation effort and power consumption of these small cells as much as possible. This can be achieved by minimizing backhaul installation by using wireless backhaul, instead of cable/fibre based backhaul, and by reducing power supply installation, for example by using an autonomous source of locally sustainable energy (e.g., solar panels or energy harvesting devices) in combination with storage/back-up battery, instead of cable-connected external power supply.

Small cell base stations operating on the basis of sustainable energy sources may sometimes be referred to as energy-sustaining small cells (ESSCs) or self-sustaining small cells. However, sources of sustainable energy typically do not allow for an uninterrupted duty cycle. Therefore, ESSCs are expected to be activated only on a need-to-communicate basis, e.g., when a nearby mobile device requests large throughput, or if a mobile terminal is located in an area served badly by the hosting macro cell. Generally speaking, ESSCs will remain in a sleep mode for most of their deployment time, while harvesting external energy (e.g., solar and wind energy) and storing it in a battery.

In order to maximize the battery lifetime for the operation of a ESSC, the ESSC needs to be put into a deep sleep mode when it's function is not needed, in order to minimize the power consumption during sleep in which only a minimal set of functions can remain in operation, such as the battery-charge-control and a wake-up mechanism.

The wake-up mechanism needs to have minimal power consumption while the ESSC is asleep and it needs to reliably wake up the remaining component of the ESSC in the case of the presence of a user with a service demand that cannot be served otherwise.

It is therefore desirable to provide a low power implementation of the wake-up/shutdown control of a small cell base station. Further, it is desirable to provide mechanisms for optimizing the wakeup threshold of a small cell base station.

EP2355594A1 discloses a method of controlling small cell base stations, comprising the steps of: identifying a presence of an active user equipment within an overlying cell; determining a set of small cell base stations provided within said overlying cell; providing a wake-up message to said set of small cell base stations within said overlying cell to cause said set of small cell base stations to transition from a sleeping state to at least one non-sleeping state.

### SUMMARY OF THE INVENTION

According to a first aspect of the invention, there is provided a small cell base station for use in a communications network having a small cell gateway, the small cell base station having a wireless backhaul link to the small cell gateway, the small cell base station comprising: an uplink detector operable to monitor an RF uplink signal; a downlink detector operable to monitor an RF downlink signal; and a microcontroller in communication with the uplink detector and the downlink detector, operable to determine if the RF uplink signal satisfies a threshold condition based on the output of the uplink detector, wherein upon determining that the threshold condition is satisfied, the microcontroller is operable to transition the small cell base station to an active mode; determine if the RF downlink signal has been absent for a predetermined period of time, wherein upon determining that the RF downlink signal has been absent for a predetermined period of time, the microcontroller is operable to transition the small cell base station to a sleep mode; and optimise the threshold condition based on the occurrence, duration and/or success of transitioning the small cell base station to the active mode; wherein the wireless backhaul link is active only while the small cell base station is in active mode, and the microcontroller is operable to determine whether the the RF uplink signal satisfies the threshold condition while the wireless backhaul link is inactive.

The uplink detector may comprise a SAW filter bank and a threshold detector.

The threshold condition may be determined to be satisfied when it is determined that the power of the RF uplink signal is above a threshold value.

The microcontroller may be a very low-end micro-control device at a low cost and low power.

The microcontroller may be operable to determine that the RF downlink signal has been absent for a predetermined period of time when the backhaul signal to the small cell base station has been disabled by the small cell gateway for a predetermined period of time after the small cell base station has transitioned to an active mode.

The microcontroller may be operable to transition the small cell base station to a sleep mode after a delay period after it is determined that the backhaul signal to the small cell base station has been disabled by the small cell gateway for a predetermined period of time.

The microcontroller may be operable to determine that the RF uplink signal is generated by a source which is moving towards the small cell base station by determining if the sensed power of the RF uplink signal increases over time.

The microcontroller may be operable to determine that the RF uplink signal is generated by a source which is moving away from the small cell base station by determining if the sensed power of the RF uplink signal decreases over time.

The microcontroller may be operable to determine the character of the RF uplink signal source in order to determine whether to transition the small cell to an active mode. The character of the RF uplink signal may refer to, for example, a mobile in bad reception from the Macro-layer which is ratcheting up its output power, a typical characteristic of a mobile in search of a network, or from a source with only short presence like a bypassing mobile in a vehicle which will most likely not be required to be served by the small cell.

The success of transitioning the small cell base station to the active mode may be determined by determining the time interval between transitions to the active mode and back to the sleep mode. If the time interval between a transition to the active mode back to sleep mode is above a threshold, the transition may be deemed to be successful, and if the time interval between a transition to the active mode back to sleep mode is below a threshold, the transition may be deemed to be unsuccessful.

If the time interval between a transition to the active mode back to sleep mode is above a threshold, the transition may be deemed to be successful as this time period may be indicative that the small cell base station has served the user which triggered the transitioning event. The term successful should be understood to mean that the small cell has transitioned to active mode and has served the user.

The microcontroller may be operable to dynamically adjust the threshold condition for transitioning the small cell base station to the active mode, such that a successful transition target level is achieved.

The small cell base station may be a repeater type small cell base station. There may be no signal processing capability contained in the repeater type small cell base station. The repeater type small cell base station may simply act as a frequency conversion device which converts the carrier frequency of the mobile response of the gateway to a more suitable frequency, such that the link between the mobile and the gateway can be established by a wireless link. This may be advantageous as the small cell base station then does not require any digital signal processing capability, thereby having the energy efficiency required for a self-sustained small cell.

According to a second aspect of the present invention, there is provided a communications network comprising a small cell base station and a small cell gateway, the small cell base station having a wireless backhaul link to the small cell gateway, wherein the small cell base station comprises: an uplink detector operable to monitor an RF uplink signal and determine if the RF uplink signal satisfies a threshold condition; a downlink detector operable to monitor an RF downlink signal; and a microcontroller in communication with the uplink detector and the downlink detector, operable to determine if the received RF uplink signal satisfies a threshold condition based on the output of the uplink detector, wherein upon determining that the threshold condition is satisfied, the microcontroller is operable to transition the small cell base station to an active mode; determine if the received RF downlink signal has been absent for a predetermined period of time, wherein upon determining that the RF downlink signal has been absent for a predetermined period of time, the microcontroller is operable to transition the small cell base station to a sleep mode; and optimise the threshold condition based on the occurrence, duration and/or success of transitioning the small cell base station to the active mode; wherein the wireless backhaul link is active only while the small cell base station is in active mode, and the microcontroller is operable to determine whether the the RF uplink signal satisfies the threshold condition while the wireless backhaul link is inactive.

According to a third aspect of the invention, there is provided a communications method for a communications network comprising a small cell base station and a small cell gateway, the small cell base station having a wireless backhaul link to the small cell gateway, the method comprising: determining if a received RF uplink signal at the small cell base station satisfies a threshold condition based on the output of an uplink detector, wherein upon determining that the threshold condition is satisfied, transitioning the small cell base station to an active mode; determining if a received RF downlink signal has been absent for a predetermined period of time, wherein upon determining that the RF downlink signal has been absent for a predetermined period of time, transitioning the small cell base station to a sleep mode; and optimising the threshold condition based on the occurrence, duration and/or success of transitioning the small cell base station to the active mode; wherein the wireless backhaul link is active only while the small cell base station is in active mode, and determining whether the the RF uplink signal satisfies the threshold condition may be performed while the wireless backhaul link is inactive.

According to a fourth aspect of the invention, there is provided a computer program product operable when executed on a computer to perform the method of the above third aspect.

Further particular and preferred aspects of the invention are set out in the accompanying independent and dependent claims.

### BRIEF DESCRIPTION OF THE DRAWINGS

Some embodiments of the apparatus and/or methods in accordance with embodiment of the present invention are now described, by way of example only, with reference to the accompanying drawings, in which:
Figure 1 schematically shows a communication network according to an embodiment;
Figure 2 schematically shows an idle mode controller including RF-detector, backhaul detector and control circuit of a small cell base station according to an embodiment; and
Figure 3 shows operation of the SAW filters of the small cell base station of Figure 2.

### DESCRIPTION OF EMBODIMENTS

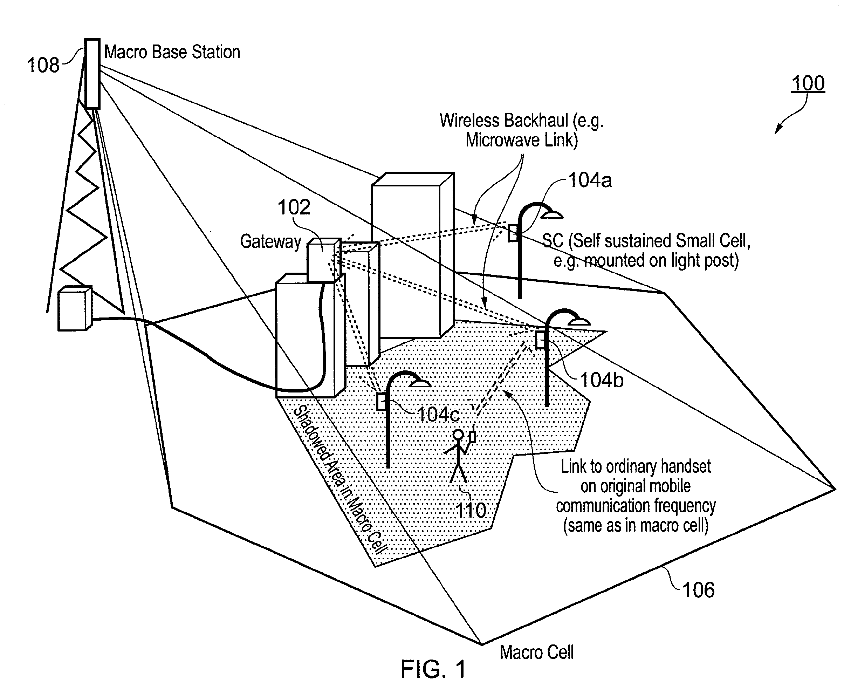

Figure 1 shows the network architecture of a self-sustaining small cell repeater network 100, comprising a gateway node 102 serving a plurality of self-sustaining small cells 104a, 104b and 104c. The small cells 104 and the gateway node 102 are provided within a macro cell 106 provided by a macro cell base station 108. A user with a mobile terminal 110 is located within the coverage area of the small cells 104 and the macro cell 106.

The gateway node 102 comprises a base band processing unit as well as the RF electronics for the transmission (TX) and receiving (RX) chain on the base station side. At this gateway node 102, the downlink signal is converted to the transport carrier that is used in the backhaul link. Via said backhaul link, the gateway is connected to the small cell base station. The backhaul link may be a wireless backhaul link and may be 60GHz for line-of-sight connections (LOS) or at lower frequencies for non-LOS connections.

At the small cell base stations 104, received downlink signals are re-converted to the original carrier frequency, which may for example be 2.1 GHzfor a UMTS network, and are then forwarded to the mobile terminal 110. On the uplink a similar process is used where uplink signals from the mobile device 110 are received by the small cells 104, converted to the backhaul-link-carrier, transmitted to the gateway node 102, re-converted to the original carrier and processed by the gateway node 102.

The small cells 104 act as repeater type small cells in that there is no signal processing capability contained in the repeater type small cells. The repeater type small cells simply act as a frequency conversion devices.

The small cell repeaters 104 are provided within the macro cell sector 106 and as long as the mobile can be served with the required data rate from the macro cell base station 108, this will be pursued. However, as soon as the mobile terminal shows up in the vicinity of a sleeping small cell 104, such as small cell 104b, a low-power listening device in the small cell 104b is operable to wake up the small cell 104b. The small cell node 104b will simply appear as a new cell and the network controller can initiate a standard hand-over process to the newly appeared cell. A link between the gateway node 102 and the small cell 104b and hence the mobile terminal 110 can then be established.

The low-power listening device or 'sniffer' in the small cell base station is implemented as power-efficiently and cost-effectively as possible.

It should be noted that a sniffer that involves any kind of receiver architecture which aims at a reception and decoding of the sniffed signal is not feasible, since a typical receiver including LNA, mixer- or down-conversion, LO-generation and ADC including a decoder-processor is too costly as well as being too power-hungry, for example 2W power consumption for the RF and a minimum of 2W for the decoder. A similar functionality may be provided within an ASIC or FPGA, but again this approach would be too costly as well as being too power-hungry.

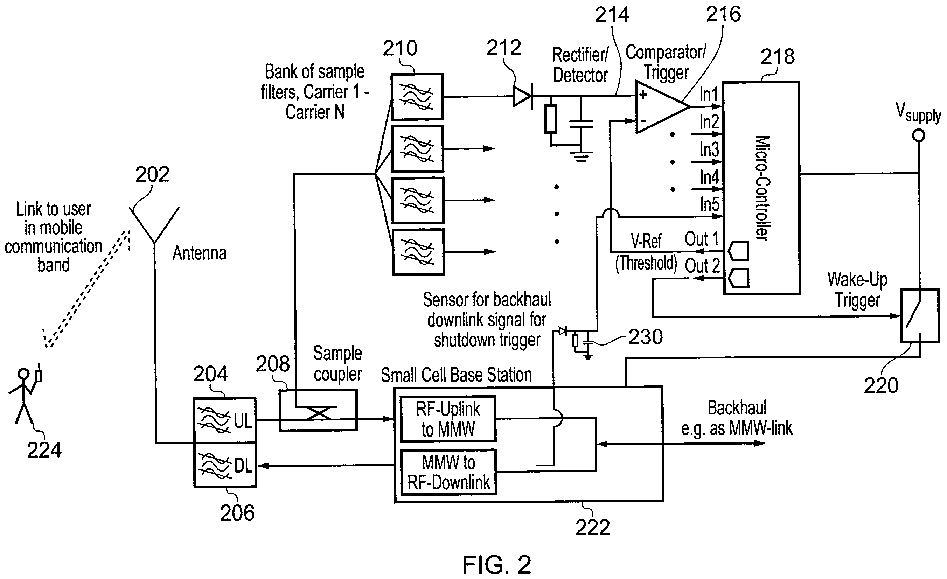

Figure 2 schematically shows shows an idle mode controller including RF-detector, backhaul detector and control circuit of a small cell base station according to an embodiment. The idle mode controller comprises an antenna 202 operable to receive and transmit RF signals to and from a mobile terminal 224. The antenna 202 is coupled to an uplink bandpass filter 204 and a downlink bandpass filter 206. Uplink signals received by the antenna 202 pass through the uplink bandpass filter 204, and a small part of the uplink signal is coupled out by the sample coupler 208 and fed to a bank of sample filters 210. Figure 2 shows N sample filters 210 for N carriers. The sample filter bank 210 may be a SAW filter bank. The output from the sample filter bank 210 is provided to a diode 212 and a rectifier 214 which act to convert the signal into a DC voltage. This DC voltage can be compared to a threshold voltage by a comparator 216 and the output of the comparator 216 can be detected by a microcontroller 218. The microcontroller 218 is operable to control a wake-up trigger switch 220 to supply voltage to the remaining components in the small cell base station 222 to wake-up the small cell base station 222.

The idle mode controller further comprises a sensor 230 for backhaul downlink signal for shutdown trigger. This shut down trigger sensor 130 may comprise a diode rectifier. Operation of sensor 230 will be described in greater detail below.

In use with the small cell base station 222 in sleep mode, the antenna 202 is operable to receive an uplink signal from a mobile terminal 224, as the mobile terminal 224 comes into range of the small cell base station 222. From the receiver-arm of the RF-antenna 202, a small part of the received uplink signal is coupled out and fed to the sample filter bank 210. Since the small cell base station 222 is in sleep mode, no transmission signal is generated in the small cell base station which could interfere or desensitize the filter bank 210. The filter bank 210 comprises a bank of very narrow band filters, which sample a small portion of each of the carriers. This allows a distinction to be made between the various carriers and will enable a distinction between different user groups to be made without a need to decode the received signal. By using the simple diode rectifier 212, 214, the filtered signal is turned into a DC-voltage, which can then be measured directly by a ADC-input of a microcontroller, or, as shown in Figure 2, can be compared to a threshold by the comparator 216. If the threshold of the comparator 216 is surpassed, it will then deliver a logical high at its output which will be sensed by the microcontroller 218. On receiving the logical high, the microcontroller 218 is operable to control wake-up trigger switch 220 to wake-up the remaining components for the small cell base station 222.

The circuitry of Figure 2 is capable of providing not only a wake-up mechanism for the small cell base station 222, but also a shutdown mechanism for the small cell base station 222 and also provides dynamic adjustment of the wake-up threshold. The circuitry of figure 2 is simple RF-circuitry in order to minimize the power consumption as much as possible.

### Wake-up trigger

The wake-up trigger is based on simple RF-power-detection circuitry and a low-complexity control-circuit, as described above. By using a narrow-band SAW-filter bank 210, a rectifier detector 212, 214 (low-cost) and a simple comparator/Schmitt-trigger threshold detector 216 (low cost, reliable, low power consumption) in combination with a very low-end micro-control device 218 (low cost, low power) a solution for a self-sustained small cell base station is provided. It should be noted that optionally, the same approach can be used to wake up parts of the small cell gateway 102, measuring activity on the backhaul uplink from the small cell.

The output of the comparator 216 or the sensing level of the Microcontroller 218 is used to trigger the wake-up of the small cell base station 222, e.g. by switching on the supply voltage of the remaining circuitry of the small cell base station 222. It should be noted that this method of comparing a threshold need not require a micro-controller 218, but if such a device is present, it may also possible to determine from the behavior of the sampled signal whether the received signal is generated by a source which is approaching (increase of sensed power over time), departing (decrease in sensed power level) and it will also enable the small cell base station to determine the character of a signal source for example, from a mobile in bad reception from the Macro-layer which is ratcheting up its output power, a typical characteristic of a mobile in search of a network, or from a source with only short presence like a bypassing mobile in a vehicle which will most likely not be required to be served by the small cell.

### Shutdown trigger

In a repeater type small cell base station in which processing has been moved out of the small cell base station in order to reduce power consumption and enable it to be powered using energy harvesting, the decision on the shutdown is taken where the processing is performed (triggered e.g. when no active user remains in the cell). The shutdown at the small cell base station 222 is triggered for example by shutting down the downlink backhaul signal. The downlink backhaul signal may be shut off for a certain required duration of the link-shut-down in order to enable the small cell base station to distinguish between a temporarily shut-down of the link, for example by a short term disruption of the LOS-link by a mobile obstacle and an intended power-down of the small cell base station. At the small cell base station, the same energy detector as described in relation to Figure 2 and the wake-up trigger (coupled in for example before the power amplifier) may be used to detect this event and trigger a shutdown. The decision making process is implemented in the microcontroller 218.

For example, if the backhaul link is implemented as a millimeter-wave link (MMW-link) then a diode detector 230 can be used and the result can be sensed and processed in the micro controller 218 (5^{th} input). The gateway node can detect if after a wake-up of a small cell base station, a mobile terminal was actually handed over to the small cell or not. If no handover happened after the wake-up, the downlink backhaul signal to the small cell base station is disabled, and after a certain period of time after the backhaul link was turned off by the gateway the small cell base station is put back into sleep mode. This time-delay in the shut-down process can be implemented in the controller to avoid unintended shutdown if for some reason the backhaul link is interrupted, for example by a mobile obstacle or object within the LOS-path.

In other words, the diode rectifier 230 and the microcontroller 218 can determine if the RF downlink signal has been absent for a predetermined period of time, wherein upon determining that the RF downlink signal has been absent for a predetermined period of time, the microcontroller may be operable to transition the small cell base station to a sleep mode.

### Dynamic adjustment of the wake-up threshold

The wakeup threshold for the wakeup trigger circuitry needs to be adjusted to match the coverage of the small cell base station. This requires identification of successful and false wakeup events. After a successful wakeup the small cell base station serves the user which triggered the event. While this is easy to determine in traditional small cells which include call processing, this is more difficult in the repeater small cell architecture where the small cell base station does not process any mobile terminal/user equipment signals. In this architecture, the success of a wakeup can be determined by observing the time until shutdown is triggered, as described above in relation to the shutdown trigger. After a successful wakeup, shutdown will be triggered after a longer time period (after serving the call) compared to after an unsuccessful wakeup, where the shutdown will be triggered immediately once it is clear that no user is handed over to the small cell. Statistics of successful/unsuccessful wakeups may be collected, and the threshold may be adjusted to achieve a target success probability.

The occurrence, duration and success-rate of the wake-up and power-down processes may be used to optimize and adapt the behavior of the small cell to its environment. The data from the mobile terminal and from the backhaul sensor may be used to identify successful or unsuccessful wakeup events at the small cell based on the time after wakeup when the downlink backhaul is disabled. Please note that a short time period will correspond to an unsuccessful wake-up event since no handover happened.

For each frequency band, the threshold is separately optimized by collecting statistics of successful and unsuccessful handovers for the current threshold, and increasing or decreasing the threshold until a target success probability is reached. This will also automatically take care of frequency bands used by other operators where no handover is triggered.

In order to provide the above mentioned functionality, the micro-controller 218 of Figure 2 would require four input ports and two output ports, plus a 5^{th} input port for sensing of the backhaul signal level. Such microcontrollers 218 require operational voltages of 3V and operate with currents in the order of 1-3mA, leading to a power consumption of a maximum of 10mW. The advantage of using a comparator/trigger instead of measuring the output of the rectifier directly with the microcontroller 218 is that the power consumption of such a comparator 216 is minimal (around 1mA, 3V). Since the microcontroller 218 is only supposed to detect the envelope of the signal and since that signal has a peak-to-average-ratio of up to 8dB or 10dB, depending on the signal quality and data rate, the resolution of the microcontroller 218 input can be about 3 to 4 bit lower than in a standard receiver (which is usually 12 bit), so a 8-bit controller would be enough to sample the RF-spectrum accurately enough to enable the required analysis of the detected RF-signals (detection of signal-ratcheting, power-level fluctuations, etc.)

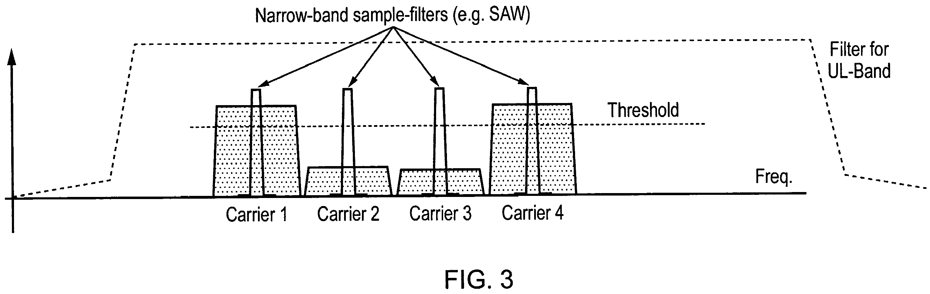

Figure 3 shows the frequency-spectrum and the filter-functions of the filter bank 210 of Figure 2. The uplink-bandpass filter 204 at the antenna 202 acts as a first filter stage. The filter bank 210 of narrow-band filters then is placed such, that each individual carrier is sampled. This can be achieved by fixed filters or by tunable filters (which will require more power consumption). The function of the placement of the filters is required, since it is necessary to know whether a mobile of the operators own customers is to be served, or, whether a user of another operator is present: depending on roaming agreements, state of the battery etc., the controller then can make the decision whether to wake up the small cell or not.

The above described embodiments provide low power energy conserving mechanisms to sense and trigger a wake-up and shutdown sequence for a repeater-based small cell base station or any other sleeping small-cell devices. The embodiments do not require any periodic communication with the network controller, no RF-signal processing is required, no decoding of any low- or high-level protocol signals between the gateway or the small cells are required.

The above embodiments rely on purely low-power components and the only active device is a threshold sensor (e.g. a sensitive Schmitt-Trigger or a low-cost and low-power microcontroller), thereby minimizing the energy consumption.

This hardware in combination with the according low-level signal analysis of the RF-signals detected by the RF-sensor allow the autonomous adaptation of the small cell to its environment.

The above embodiments minimize the energy consumption of the wake-up and shutdown process by avoiding any RF-signal processing. Only cheap and very energy efficient RF-and control components are required. they also provide an approach of optimizing the wakeup trigger without direct access to the base station processing which can be located outside of the SC for reducing the energy consumption.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A small cell base station (104a-c) for use in a communications network (10) having a small cell gateway (102), the small cell base station (104a-c) having a wireless backhaul link to the small cell gateway (102), the small cell base station (104a-c) comprising:
an uplink detector (210-216) operable to monitor an RF uplink signal;
a downlink detector (230) operable to monitor an RF downlink signal; and
a microcontroller (218) in communication with the uplink detector (210-216) and the downlink detector (230) and operable to
determine if the RF uplink signal satisfies a threshold condition based on the output (In1-In4) of the uplink detector (210-216), wherein upon determining that the threshold condition is satisfied, the microcontroller (218) is operable to transition the small cell base station (104a-c) to an active mode;
determine if the RF downlink signal has been absent for a predetermined period of time, wherein upon determining that the RF downlink signal has been absent for a predetermined period of time, the microcontroller (218) is operable to transition the small cell base station (104a-c) to a sleep mode; and
optimise the threshold condition based on the occurrence, duration and/or success of transitioning the small cell base station (104a-c) to the active mode;
wherein the wireless backhaul link is active only while the small cell base station (104a-c) is in active mode, and the microcontroller (218) is operable to determine whether the RF uplink signal satisfies the threshold condition while the wireless backhaul link is inactive.

2. A small cell base station (104a-c) according to claim 1, wherein the uplink detector (210-216) comprises a SAW filter bank (210) and a threshold detector.

3. A small cell base station (104a-c) according to claim 1 or 2, wherein the threshold condition is determined to be satisfied when it is determined that the power of the RF uplink signal is above a threshold value.

4. A small cell base station (104a-c) according to any preceding claim, wherein the microcontroller (218) is operable to determine that the RF downlink signal has been absent for a predetermined period of time when the backhaul signal to the small cell base station (104a-c) has been disabled by the small cell gateway (102) for a predetermined period of time after the small cell base station (104a-c) has transitioned to an active mode.

5. A small cell base station (104a-c) according to claim 4, wherein the microcontroller is operable to transition the small cell base station to a sleep mode after a delay period after it is determined that the backhaul signal to the small cell base station has been disabled by the small cell gateway for a predetermined period of time.

6. A small cell base station (104a-c) according to any preceding claim, wherein the microcontroller is operable to determine that the RF uplink signal is generated by a source which is moving towards the small cell base station by determining if the sensed power of the RF uplink signal increases over time.

7. A small cell base station (104a-c) according to claim 1 wherein the microcontroller is operable to determine that the RF uplink signal is generated by a source which is moving away from the small cell base station by determining if the sensed power of the RF uplink signal decreases over time.

8. A small cell base station (104a-c) according to any preceding claim, wherein the microcontroller (218) is operable to determine the character of the RF uplink signal source in order to determine whether to transition the small cell base station (104a-c) to an active mode.

9. A small cell base station (104a-c) according to any preceding claim, wherein the success of transitioning the small cell base station (104a-c) to the active mode is determined by determining the time interval between transitions to the active mode and back to the sleep mode.

10. A small cell base station (104a-c) according to claim 9, wherein if the time interval between a transition to the active mode back to sleep mode is above a threshold, the transition is deemed to be successful, and if the time interval between a transition to the active mode back to sleep mode is below a threshold, the transition is deemed to be unsuccessful.

11. A small cell base station (104a-c) according to claim 9 or 10, wherein the microcontroller (218) is operable to dynamically adjust the threshold condition for transitioning the small cell base station (104a-c) to the active mode, such that a successful transition target level is achieved.

12. A small cell base station (104a-c) according to any preceding claim, wherein the small cell base station is a repeater type small cell base station.

13. A communications network (10) comprising a small cell base station (104a-c) and a small cell gateway (102), the small cell base station (104a-c) having a wireless backhaul link to the small cell gateway (102), wherein the small cell base station (104a-c) comprises:
an uplink detector (210-216) operable to monitor an RF uplink signal and determine if the RF uplink signal satisfies a threshold condition;
a downlink detector (230) operable to monitor an RF downlink signal; and
a microcontroller (218) in communication with the uplink detector (210-216) and the downlink detector (230) and operable to
determine if the received RF uplink signal satisfies a threshold condition based on the output of the uplink detector (210-216), wherein upon determining that the threshold condition is satisfied, the microcontroller (218) is operable to transition the small cell base station (104a-c) to an active mode;
determine if the received RF downlink signal has been absent for a predetermined period of time, wherein upon determining that the RF downlink signal has been absent for a predetermined period of time, the microcontroller is operable to transition the small cell base station to a sleep mode; and
optimise the threshold condition based on the occurrence, duration and/or success of transitioning the small cell base station to the active mode;
wherein the wireless backhaul link is active only while the small cell base station (104a-c) is in active mode, and the microcontroller (218) is operable to determine whether the RF uplink signal satisfies the threshold condition while the wireless backhaul link is inactive.

14. A communications method for a communications network (10) comprising a small cell base station (104a-c) and a small cell gateway (102), the small cell base station (104a-c) having a wireless backhaul link to the small cell gateway (102), the method comprising:
determining if a received RF uplink signal at the small cell base station (104a-c) satisfies a threshold condition based on the output of an uplink detector (210-216), wherein upon determining that the threshold condition is satisfied, transitioning the small cell base station (104a-c) to an active mode;
determining if a received RF downlink signal has been absent for a predetermined period of time, wherein upon determining that the RF downlink signal has been absent for a predetermined period of time, transitioning the small cell base station to a sleep mode; and
optimising the threshold condition based on the occurrence, duration and/or success of transitioning the small cell base station to the active mode;
wherein the wireless backhaul link is active only while the small cell base station (104a-c) is in active mode, and determining whether the RF uplink signal satisfies the threshold condition may be performed while the wireless backhaul link is inactive.

15. A computer program product operable when executed on a computer to perform the method of claim 14.

## Patentansprüche

1. Station auf Basis kleiner Zellen (104a-c) zum Gebrauch in einem Kommunikationsnetzwerk (10), das ein Gateway kleiner Zellen (102) aufweist, wobei die Station auf Basis kleiner Zellen (104a-c) eine drahtlose Backhaul-Verbindung zum Gateway kleiner Zellen (102) aufweist, wobei die Station auf Basis kleiner Zellen (104a-c) umfasst:
einen Uplink-Detektor (210-216), der betreibbar ist zum Überwachen eines RF-Uplink-Signals;
einen Downlink-Detektor (230), der betreibbar ist zum Überwachen eines RF-Downlink-Signals; und
einen Mikrocontroller (218) in Kommunikation mit dem Uplink-Detektor (210-216) und dem Downlink-Detektor (230), und betreibbar ist zum Bestimmen, ob das RF-Uplink-Signal eine Schwellenwertbedingung erfüllt auf Grundlage des Ausgangs (In1-In4) des Uplink-Detektors (210-216), wobei bei Bestimmen, dass die Schwellenwertbedingung erfüllt wird, der Mikrocontroller (218) betreibbar ist zum Wechseln der Station auf Basis kleiner Zellen (104a-c) in einen aktiven Modus;
Bestimmen, ob das RF-Downlink-Signal abwesend war während eines vorbestimmten Zeitraums, wobei bei Bestimmen, dass das RF-Downlink-Signal abwesend war für einen vorbestimmten Zeitraum, der Mikrocontroller (218) betreibbar ist zum Wechseln der Station auf Basis kleiner Zellen (104a-c) in einen Schlafmodus; und
Optimieren der Schwellenwertbedingung auf Grundlage von Auftreten, Dauer und/oder Erfolg des Wechselns der Station auf Basis kleiner Zellen (104a-c) in den aktiven Modus;
wobei die drahtlose Backhaul-Verbindung nur aktiv ist, während sich die Station auf Basis kleiner Zellen (104a-c) im aktiven Modus befindet, und der Mikrocontroller (218) betreibbar ist zum Bestimmen, ob das RF-Uplink-Signal die Schwellenwertbedingung erfüllt, während die drahtlose Backhaul-Verbindung inaktiv ist.

2. Station auf Basis kleiner Zellen (104a-c) nach Anspruch 1, wobei der Uplink-Detektor (210-216) eine SAW-Filterbank (210) und einen Schwellenwertdetektor umfasst.

3. Station auf Basis kleiner Zellen (104a-c) nach Anspruch 1 oder 2, wobei die Schwellenwertbedingung als zufriedenstellend bestimmt wird, wenn bestimmt wird, dass die Leistung des RF-Uplink-Signals über einem Schwellenwert liegt.

4. Station auf Basis kleiner Zellen (104a-c) nach einem beliebigen der vorhergehenden Ansprüche, wobei der Mikrocontroller (218) betreibbar ist zum Bestimmen, dass das RF-Downlink-Signal eine bestimmte Zeitdauer lang abwesend war, wenn das Backhaul-Signal zur Station auf Basis kleiner Zellen (104a-c) desaktiviert worden ist durch das Gateway kleiner Zellen (102) für einen vorbestimmten Zeitraum, nachdem die Station auf Basis kleiner Zellen (104a-c) in einen aktiven Modus übergegangen ist.

5. Station auf Basis kleiner Zellen (104a-c) nach Anspruch 4, wobei der Mikrocontroller betreibbar ist zum Wechseln der Station auf Basis kleiner Zellen nach einem Verzögerungszeitraum in einen Schlafmodus, nachdem bestimmt worden ist, dass das Backhaul-Signal zur Station auf Basis kleiner Zellen desaktiviert worden ist durch das Gateway kleiner Zellen für einen vorbestimmten Zeitraum.

6. Station auf Basis kleiner Zellen (104a-c) nach einem beliebigen der vorhergehenden Ansprüche, wobei der Mikrocontroller betreibbar ist zum Bestimmen, dass das RF-Uplink-Signal erzeugt wird durch eine Quelle, die sich hinbewegt auf die Station auf Basis kleiner Zellen, durch Bestimmen, ob die gefühlte Leistung des RF-Uplink-Signals mit der Zeit wächst.

7. Station auf Basis kleiner Zellen (104a-c) nach Anspruch 1, wobei der Mikrocontroller betreibbar ist zum Bestimmen, dass das RF-Uplink-Signal erzeugt wird durch eine Quelle, die sich wegbewegt von der Station auf Basis kleiner Zellen, durch Bestimmen, ob die gefühlte Leistung des RF-Uplink-Signals mit der Zeit abfällt.

8. Station auf Basis kleiner Zellen (104a-c) nach einem beliebigen der vorhergehenden Ansprüche, wobei der Mikrocontroller (218) betreibbar ist zum Bestimmen der Eigenschaft der RF-Uplink-Signalquelle, um zu bestimmen, ob die Station auf Basis kleiner Zellen (104a-c) in einen aktiven Modus geschaltet werden soll.

9. Station auf Basis kleiner Zellen (104a-c) nach einem beliebigen der vorhergehenden Ansprüche, wobei der Erfolg des Wechselns der Station auf Basis kleiner Zellen (104a-c) in den aktiven Modus bestimmt wird durch Bestimmen des Zeitintervalls zwischen den Wechseln in den aktiven Modus und zurück in den Schlafmodus.

10. Station auf Basis kleiner Zellen (104a-c) nach Anspruch 9, wobei, wenn das Zeitintervall zwischen einem Wechseln in den aktiven Modus zurück in den Schlafmodus über einem Schwellenwert liegt, der Wechsel als erfolgreich angesehen wird, und, wenn das Zeitintervall zwischen einem Wechsel in den aktiven Modus zurück in den Schlafmodus unterhalb eines Schwellenwerts liegt, der Wechsel als nicht erfolgreich angesehen wird.

11. Station auf Basis kleiner Zellen (104a-c) nach Anspruch 9 oder 10, wobei der Mikrocontroller (218) betreibbar ist, um dynamisch die Schwellenwertbedingung einzustellen für den Wechsel der Station auf Basis kleiner Zellen (104a-c) in den aktiven Modus, sodass ein erfolgreiches Wechselzielniveau erreicht wird.

12. Station auf Basis kleiner Zellen (104a-c) nach einem beliebigen der vorhergehenden Ansprüche, wobei die Station auf Basis kleiner Zellen eine Station auf Basis kleiner Zellen vom Wiederholungstyp ist

13. Kommunikationsnetzwerk (10), umfassend eine Station auf Basis kleiner Zellen (104a-c) und ein Gateway kleiner Zellen (102), wobei die Station auf Basis kleiner Zellen (104a-c) eine drahtlose Backhaul-Verbindung zum Gateway kleiner Zellen (102) aufweist, wobei die Station auf Basis kleiner Zellen (104a-c) umfasst:
einen Uplink-Detektor (210-216), der betreibbar ist zum Überwachen eines RF-Uplink-Signals und zum Bestimmen, ob das RF-Uplink-Signal eine Schwellenwertbedingung erfüllt;
einen Downlink-Detektor (230), der betreibbar ist zum Überwachen eines RF-Downlink-Signals; und
einen Mikrocontroller (218) in Kommunikation mit dem Uplink-Detektor (210-216) und dem Downlink-Detektor (230) und betreibbar zum Bestimmen, ob das empfange RF-Uplink-Signal eine Schwellenwertbedingung erfüllt auf Grundlage des Ausgangs des Uplink-Detektors (210-216), wobei bei Bestimmen, dass die Schwellenwertbedingung erfüllt wird, der Mikrocontroller (218) betreibbar ist zum Wechseln der Station auf Basis kleiner Zellen (104a-c) in einen aktiven Modus;
Bestimmen, ob das empfangene RF-Downlink-Signal abwesend war während eines vorbestimmte Zeitraums, wobei bei Bestimmen, dass das RF-Downlink-Signal abwesend war für einen vorbestimmten Zeitraum, der Mikrocontroller betreibbar ist zum Wechseln der Station auf Basis kleiner Zellen in einen Schlafmodus; und
Optimieren der Schwellenwertbedingung auf Grundlage von Auftreten, Dauer und/oder Erfolg des Wechselns der Station auf Basis kleiner Zellen in den aktiven Modus; wobei die drahtlose Backhaul-Verbindung nur aktiv ist, während sich die Station auf Basis kleiner Zellen (104a-c) in einem aktiven Modus befindet, und der Mikrocontroller (218) betreibbar ist zum Bestimmen, ob das RF-Uplink-Signal die Schwellenwertbedingung erfüllt, während die drahtlose Backhaul-Verbindung inaktiv ist.

14. Kommunikationsverfahren für ein Kommunikationsnetzwerk (10), umfassend eine Station auf Basis kleiner Zellen (104a-c) und ein Gateway kleiner Zellen (102), wobei die Station auf Basis kleiner Zellen (104a-c) eine drahtlose Backhaul-Verbindung zum Gateway kleiner Zellen (102) aufweist, wobei das Verfahren umfasst:
Bestimmen, ob ein an der Station auf Basis kleiner Zellen (104a-c) empfangenes RF-Uplink-Signal eine Schwellenwertbedingung erfüllt auf Grundlage des Ausgangs eines Uplink-Detektors (210-216), wobei bei Bestimmen, dass die Schwellenwertbedingung erfüllt wird, die Station auf Basis kleiner Zellen (104a-c) in einen aktiven Modus wechselt;
Bestimmen, ob ein empfangenes RF-Downlink-Signal abwesend war für einen vorbestimmten Zeitraum, wobei bei Bestimmen, dass das RF-Downlink-Signal abwesend war für einen vorbestimmten Zeitraum, die Station auf Basis kleiner Zellen in einen Schlafmodus wechselt; und
Optimieren der Schwellenwertbedingung auf Grundlage von Auftreten, Dauer und/oder Erfolg des Wechselns der Station auf Basis kleiner Zellen in den aktiven Modus; wobei die drahtlose Backhaul-Verbindung nur dann aktiv ist, während die Station auf Basis kleiner Zellen(104a-c) sich in einem aktiven Modus befindet, und Bestimmen, ob das RF-Uplink-Signal die Schwellenwertbedingung erfüllt und durchgeführt werden kann, während die drahtlose Backhaul-Verbindung inaktiv ist.

15. Computerprogramm-Produkt, das betreibbar ist, wenn es auf einem Computer ausgeführt wird, zum Durchführen des Verfahrens nach Anspruch 14.

## Revendications

1. Station de base à petites cellules (104a à c) à utiliser dans un réseau de communication (10) ayant une passerelle à petites cellules (102), la station de base à petites cellules (104a à c) ayant une liaison terrestre sans fil reliée à la passerelle à petites cellules (102), la station de base à petites cellules (104a à c) comprenant :
un détecteur de liaison montante (210 à 216) permettant de surveiller un signal RF de liaison montante ;
un détecteur de liaison descendante (230) permettant de surveiller un signal RF de liaison descendante ; et
un microcontrôleur (218) en communication avec le détecteur de liaison montante (210 à 216) et le détecteur de liaison descendante (230) et permettant de
déterminer si le signal RF de liaison montante satisfait une condition de seuil sur la base de la sortie (In1 à In4) du détecteur de liaison montante (210 à 216), dans laquelle lorsque l'on détermine que la condition de seuil est satisfaite, le microcontrôleur (218) permet de faire passer la station de base à petites cellules (104a à c) en mode actif ;
déterminer si le signal RF de liaison descendante a été absent pendant une période prédéterminée, dans laquelle lorsque l'on détermine que le signal RF de liaison descendante a été absent pendant une période prédéterminée, le microcontrôleur (218) permet de faire passer la station de base à petites cellules (104a à c) en mode de veille ; et
optimiser la condition de seuil sur la base de l'occurrence, de la durée et/ou du succès du passage de la station de base à petites cellules (104a à c) en mode actif ;
dans lequel la liaison terrestre sans fil est active seulement lorsque la station de base à petites cellules (104a à c) est en mode actif, et le microcontrôleur (218) permet de déterminer si le signal RF de liaison montante satisfait la condition de seuil lorsque la liaison terrestre sans fil est inactive.

2. Station de base à petites cellules (104a à c) selon la revendication 1, dans laquelle le détecteur de liaison montante (210 à 216) comprend un banc de filtres SAW (210) et un détecteur de seuil.

3. Station de base à petites cellules (104a à c) selon la revendication 1 ou 2, dans laquelle la condition de seuil est déterminée pour être satisfaite lorsqu'il est déterminé que la puissance du signal RF de liaison montante est supérieure à une valeur de seuil.

4. Station de base à petites cellules (104a à c) selon l'une quelconque des revendications précédentes, dans laquelle le microcontrôleur (218) permet de déterminer que le signal RF de liaison descendante a été absent pendant une période prédéterminée lorsque le signal terrestre en direction de la station de base à petites cellules (104a à c) a été désactivé par la passerelle à petites cellules (102) pendant une période prédéterminée après que la station de base à petites cellules (104a à c) est passée en mode actif.

5. Station de base à petites cellules (104a à c) selon la revendication 4, dans laquelle le microcontrôleur permet de faire passer la station de base à petites cellules en mode de veille suite à une période d'attente après qu'il a été déterminé que le signal terrestre en direction de la station de base à petites cellules a été désactivé par la passerelle à petites cellules pendant une période prédéterminée.

6. Station de base à petites cellules (104a à c) selon l'une quelconque des revendications précédentes, dans laquelle le microcontrôleur permet de déterminer que le signal RF de liaison montante est généré par une source qui se dirige vers la station de base à petites cellules en déterminant si la puissance détectée du signal RF de liaison montante augmente avec le temps.

7. Station de base à petites cellules (104a à c) selon la revendication 1, dans laquelle le microcontrôleur permet de déterminer que le signal RF de liaison montante est généré par une source qui s'éloigne de la station de base à petites cellules en déterminant si la puissance détectée du signal RF de liaison montante diminue avec le temps.

8. Station de base à petites cellules (104a à c) selon l'une quelconque des revendications précédentes, dans laquelle le microcontrôleur (218) permet de déterminer le caractère de la source du signal RF de liaison montante afin de déterminer s'il faut faire passer la station de base à petites cellules (104a à c) en mode actif.

9. Station de base à petites cellules (104a à c) selon l'une quelconque des revendications précédentes, dans laquelle le succès du passage de la station de base à petites cellules (104a à c) en mode actif est déterminé en déterminant l'intervalle de temps des passages entre le mode actif et le retour en mode de veille.

10. Station de base à petites cellules (104a à c) selon la revendication 9, dans laquelle si l'intervalle de temps du passage entre le mode actif et le retour en mode de veille est supérieur à un seuil, le passage est considéré comme réussi, et si l'intervalle de temps du passage entre le mode actif et le retour en mode de veille est inférieur à un seuil, le passage est considéré comme un échec.

11. Station de base à petites cellules (104a à c) selon la revendication 9 ou 10, dans laquelle le microcontrôleur (218) permet d'ajuster dynamiquement la condition de seuil pour faire passer la station de base à petites cellules (104a à c) en mode actif, de sorte qu'un niveau cible de passage réussi soit atteint.

12. Station de base à petites cellules (104a à c) selon l'une quelconque des revendications précédentes, dans laquelle la station de base à petites cellules est une station de base à petites cellules de type répéteur.

13. Réseau de communication (10) comprenant une station de base à petites cellules (104a à c) et une passerelle à petites cellules (102), la station de base à petites cellules (104a à c) ayant une liaison terrestre sans fil reliée à la passerelle à petites cellules (102), dans lequel la station de base à petites cellules (104a à c) comprend :
un détecteur de liaison montante (210 à 216) permettant de surveiller un signal RF de liaison montante et de déterminer si le signal RF de liaison montante satisfait une condition de seuil ;
un détecteur de liaison descendante (230) permettant de surveiller un signal RF de liaison descendante ; et
un microcontrôleur (218) en communication avec le détecteur de liaison montante (210 à 216) et le détecteur de liaison descendante (230) et permettant de
déterminer si le signal RF de liaison montante reçu satisfait une condition de seuil sur la base de la sortie du détecteur de liaison montante (210 à 216), dans lequel lorsque l'on détermine que la condition de seuil est satisfaite, le microcontrôleur (218) permet de faire passer la station de base à petites cellules (104a à c) en mode actif ;
déterminer si le signal RF de liaison descendante reçu a été absent pendant une période prédéterminée, dans lequel lorsque l'on détermine que le signal RF de liaison descendante a été absent pendant une période prédéterminée, le microcontrôleur permet de faire passer la station de base à petites cellules en mode de veille ; et
optimiser la condition de seuil sur la base de l'occurrence, de la durée et/ou du succès du passage de la station de base à petites cellules en mode actif ;
dans lequel la liaison terrestre sans fil est active seulement lorsque la station de base à petites cellules (104a à c) est en mode actif, et le microcontrôleur (218) permet de déterminer si le signal RF de liaison montante satisfait la condition de seuil lorsque la liaison terrestre sans fil est inactive.

14. Procédé de communication pour un réseau de communication (10) comprenant une station de base à petites cellules (104a à c) et une passerelle à petites cellules (102), la station de base à petites cellules (104a à c) ayant une liaison terrestre sans fil reliée à la passerelle à petites cellules (102), le procédé comprenant :
déterminer si un signal RF de liaison montante reçu au niveau de la station de base à petites cellules (104a à c) satisfait une condition de seuil sur la base de la sortie d'un détecteur de liaison montante (210 à 216), dans lequel lorsque l'on détermine que la condition de seuil est satisfaite, faire passer la station de base à petites cellules (104a à c) en mode actif ;
déterminer si un signal RF de liaison descendante reçu a été absent pendant une période prédéterminée, dans lequel lorsque l'on détermine que le signal RF de liaison descendante a été absent pendant une période prédéterminée, faire passer la station de base à petites cellules en mode de veille ; et
optimiser la condition de seuil sur la base de l'occurrence, de la durée et/ou du succès du passage de la station de base à petites cellules en mode actif ;
dans lequel la liaison terrestre sans fil est active seulement lorsque la station de base à petites cellules (104a à c) est en mode actif, et on peut déterminer que le signal RF de liaison montante satisfait la condition de seuil lorsque la liaison terrestre sans fil est inactive.

15. Produit de programme informatique permettant, lorsqu'il est exécuté sur un ordinateur, d'exécuter le procédé selon la revendication 14.
